# NEUE EUROPÄISCHE PATENTSCHRIFT

(11) **EP 3 737 514 B2**
(45) Veröffentlichungstag und Bekanntmachung des Hinweises auf die Entscheidung über den Einspruch: **14.08.2024**
(45) Hinweis auf die Patenterteilung: 17.11.2021
(21) Anmeldenummer: 18829744.4
(22) Anmeldetag: 06.12.2018
(51) Int. Cl.: B21K 1/22, B21C 1/22, B21C 1/24, B23P 15/00, F01L 3/14

(54) **VERFAHREN UND VORRICHTUNG ZUM HERSTELLEN VON HOHLEN, INNENGEKÜHLTEN VENTILEN**
PROCESS AND DEVICE FOR MANUFACTURING HOLLOW, INTERNALLY COOLED VALVES
PROCÉDÉ ET DISPOSITIF SERVANT À FABRIQUER DES SOUPAPES CREUSES REFROIDIES À L'INTÉRIEUR

(30) Priorität: 10.01.2018 DE 102018100413
(43) Veröffentlichungstag der Anmeldung: 18.11.2020
(73) Patentinhaber: Federal-Mogul Valvetrain GmbH, 30890 Barsinghausen (DE)
(72) Erfinder: MATTHIAS, Thorsten, 30826 Garbsen (DE); WOLKING, Antonius, 30890 Barsinghausen (DE); BAYARD, Guido, 44369 Dortmund (DE)
(74) Vertreter: Kurig, Thomas
(86) Internationale Anmeldenummer: PCT/EP2018/083759
(87) Internationale Veröffentlichungsnummer: WO 2019/137702

(56) Entgegenhaltungen:
- EP-A1- 2 325 446
- EP-A1- 2 540 414
- EP-A1- 2 690 262
- CN-U- 202 053 075
- DE-A1- 102015 220 891
- JP-A- 2005 118 799
- JP-A- 2011 167 707

## Beschreibung

Die vorliegende Erfindung betrifft ein Verfahren und Vorrichtung zum Herstellen von hohlen, innengekühlten Ventilen. Die Erfindung betrifft insbesondere das Herstellen von Ventilrohlingen aus Ventilvorformlingen.

Bisher bekannte Verfahren zum Umformen von Ventilformligen sind aus den

Patentdokumenten EP 2690262 A1, EP 2540414 A1, CN 202053075 U, JP2005 118799 A, JP 2011 167707 A und DE 102015220891 A1 bekannt.

EP 2690262 A1, welche die Basis für den Oberbegriff der Ansprüche 1 und 8 bildet, betrifft die Herstellung eines Ventils mit einem hohlen Schaft durch Rundkneten und Verjüngen durch Einpressen in eine Matrize. Das Dokument

EP 2540414 A1 betrifft ebenfalls ein Verjüngen eines Ventilschafts durch ein Einpressen in eine Matrize. Das Dokument CN 202053075 U zeigt ein zweistufiges Verfahren zum Kaltziehen von Metallrohren. Das Dokument CN 202053075 U zeigt ein zweistufiges Verfahren zum Kaltziehen von Metallrohren. Die japanische Patentanmeldung

JP2005 118799 A zeigt wie ein Durchmesser eines Rohrs verringert werden kann, indem es durch zwei Matrizen hindurchgezogen bzw gepresst wird. Die Japanische Patentanmeldung JP 2001 167707 A beschreibt eine Zugvorrichtung für ein rohrförmige Werkstück wobei der Zieheisen ebenfalls mit einer Art Kern versehen ist um das Rohrförmige Werkstück nicht nur von außen sondern auch von innen umzuformen. Das Dokument DE 102015220891 beschreibt ein Verfahren zum Rundquerwalzen eines Ventilschafts.

Die vorliegende Erfindung ist durch die Gegenstände des Vorrichtungsanspruchs 1 und des abhängigen Verfahrensanspruchs 6 definiert, wobei bevorzugte Ausführungen in den abhängigen Ansprüchen definiert sind.

Das vorliegende Verfahren nutzt dabei ein Verjüngen des Querschnitts. Das Verjüngen ist ein Fertigungsverfahren zur Verringerung von Querschnitten von massiven oder hohlen Werkstücken. Hier wird nur ein Teil eines Ventil-Vorfomlings verjüngt. Das Verjüngen hat vergleichsweise geringe Bedeutung und wird zum Durchdrücken gezählt, das wiederum zum Druckumformen zählt. Bisher wird das Verjüngen für die Herstellung von Stückgütern, insbesondere für Wellen von Getrieben oder für Radbefestigungsschrauben genutzt. Beim Verjüngen werden Rohre oder Stangen als Rohteil verwendet und wie bei allen Verfahren des Durchdrückens durch ein hohles Werkzeug (Matrize) gedrückt, das im Falle des Verjüngens und Strangpressens die zu erzeugende Querschnittsform enthält. Beim Verjüngen werden die Rohteile vor der Öffnung der Matrize nicht gestützt, weshalb es zum Knicken oder Beulen kommen kann, wenn die freie Länge zu groß, oder die Wandstärke zu klein oder der Verjüngungsschritt zu groß ist. Aufgrund der fehlenden Abstützung kann das Verjüngen jedoch gut mit anderen Verfahren kombiniert werden.

Gemäß einem ersten Aspekt der vorliegenden Erfindung wird eine Verjüngungsmaschine zum Umformen eines Ventilvorformlings mit den Merkmalen des Anspruchs 1 bereitgestellt. Hier wird ein im Wesentlichen stab- bzw. rohrförmiger Ventilschaftabschnitt in ein zu kleines kegelförmiges Loch hineingepresst, wodurch ein Durchmesser des Ventilschaftabschnitts verringert wird, und eine Länge des Ventilschaftabschnitts gleichzeitig zunimmt, was durch den Masseerhalt bedingt ist. Das Verfahren entspricht im Wesentlichen dem Drahtziehen durch einen Ziehstein, basiert jedoch auf einem Schieben bzw. Eindrücken und nicht auf einem Hineinziehen. Der Schaftbereich vor der Öffnung bzw. dem Reduzierkegelabschnitt ist beim Verjüngen einer Druckbelastung unterworfen. Durch die Druckbelastung kann es zu einem Einknicken oder einem Stauchen des Ventilschafts kommen. Die Druckbelastung stellt ebenfalls eine Grenze für einen möglichen Verjüngungsgrad dar, da ein unter Druck belasteter Stab nur eine begrenzte Belastung ertragen kann, und da der Verjüngungsgrad mit dem Druck korreliert, ist der Druck notwendig, um einen Schaftabschnitt zu verjüngen. Es ist daher wünschenswert, einen maximalen Verjüngungsgrad zu erreichen, um einen Ventilvorformling in möglichst wenigen Verjüngungsschnitten zu einem Ventilrohling umformen zu können.

Die Matrize stellt dabei auch einen wesentlichen Schritt zum Umformen von Ventilvorformlingen bereit, wobei ein Schaft eines Ventilvorformlings mit seinem hohlen Schaftabschnitt in die Matrize eingepresst wird, wobei ein Ausgangs-Außendurchmesser des Ventilvorformlings auf den Reduzierkegel-Innendurchmesser bzw. einen Matrizeninnendurchmesser reduziert bzw. verjüngt wird. Die Matrize kann zudem einen Einlaufbereich aufweisen, um einen Schaftabschnitt zu dem Reduzierkegel hinzuleiten. Weiterhin kann die Matrize auch einen nur annähernd kegelförmigen ReduzierkegelAbschnitt aufweisen, der von einer reinen Kegelform leicht abweicht. Der Reduzierkegel und die Matrize könne dabei einen abgestuften Reduzierkegel aufweisen. Die Matrize kann weiter mit Merkmalen versehen sein wie sie von Draht-Ziehsteinen bekannt sind.

In einer weiteren Ausführungsform der Matrize ist der Reduzierkegel-Abschnitt ein erster Reduzierkegel-Abschnitt, und die Matrize umfasst weiter einen zweiten ReduzierkegelAbschnitt, wobei zwischen dem ersten Reduzierkegel-Abschnitt und dem zweiten Reduzierkegel-Abschnitt ein Übergangsabschnitt angeordnet ist. Diese Ausführung betrifft eine zweistufige Matrize, bei welcher ein Schaftabschnitt in zwei aufeinanderfolgenden Stufen verjüngt wird. Zwischen den Verjüngungsstufen befindet sich ein Übergangsabschnitt, der einen verjüngten Schaftabschnitt von der gesamten Außenseite führt, sodass dieser nicht einknicken kann. Da der Schaftabschnitt bereits verjüngt ist, erfordert die zweite Verjüngungsstufe eine geringere Kraft, bzw. einen geringeren Druck. Dieser kann durch die noch nicht verjüngten Schaftabschnitte besser aufgenommen werden. Die Grundidee dieser Ausführung besteht dabei nicht darin, eine bereits bestehende Matrize durch eine zweite Verjüngungsstufe zu verbessern, sondern eine vollständig neu gestaltete Matrize zu verwenden, deren erster Verjüngungsschritt deutlich kleiner ist als bei einer einstufigen Matrize. Nach dem ersten Verjüngungsschritt folgt ein zweiter Verjüngungsschritt, der ebenfalls kleiner ist als bei einer einstufigen Matrize. Eine Summe der beiden Verjüngungsschritte soll jedoch größer sein als das was mit einer einstufigen Matrize möglich ist. Dies ist unter anderem auch dadurch bedingt, dass die Kraft, die für die zweite Verjüngung notwendig ist, erst ansteigt, wenn das im ersten Verjüngungsschritt verjüngte Schaftende des Ventilvorformlings erst deutlich ansteigt bzw grösser wird, wenn das Ventilschaftende bereits weiter in den ersten Reduzierkegel eingedrungen ist, und so das kürzere Ventilschaftende erst bei einer höheren Druckkraft einknickt oder versagt.

Gemäß einer weiteren beispielhaften Ausführungsform der Matrize ist der Übergangsabschnitt zwischen dem ersten und dem zweiten Reduzierkegel-Abschnitt zylinderförmig. Diese Ausführung erzeugt eine höhere Reibung in dem Übergangsabschnitt, da das verjüngte Material nicht nur plastisch sondern auch elastisch verformt ist, und sich die elastische Verformung in dem Übergangsabschnitt nicht entspannen kann. Diese Art des Übergangsabschnitts hat jedoch den Vorteil, dass der zweite Reduzierabschnitt den bereits verjüngten Ventilschaftabschnitt nicht noch einmal elastisch verformen muss. Hier wird der bereits verjüngte Ventilschaftabschnitt bereits beim Eintritt in den zweiten Reduzierabschnitt weiter plastisch verformt, was eine kürzere Bauart der Matrize ermöglicht.

Bei einer zusätzlichen Ausführung der Matrize erweitert sich der Übergangsabschnitt zwischen dem ersten und dem zweiten Reduzierkegel-Abschnitt. In dieser Ausführung verjüngt der erste Reduzierkegel-Abschnitt das eingepresste Material stärker als einen Eingangsdurchmesser des zweiten Reduzierkegel-Abschnitts. Der Innendurchmesser des ersten Reduzierkegel-Abschnitts liegt hier unter einem Eingangsdurchmesser des zweiten Reduzierkegelabschnitts.

Bei einer weiteren Ausführungsform der vorliegenden Erfindung umfasst die Matrize hinter dem Reduzierkegel-Abschnitt bzw. dem zweiten Reduzierkegel-Abschnitt einen Kalibrierungsabschnitt, der zylinderförmig ist. Der Kalibrierungsabschnitt weist eine Länge auf, die größer ist als eine maximale Länge des verjüngten bzw. zweifach verjüngten Schaftabschnitts. Der Kalibrierungsabschnitt dient hier dazu, den Schaftabschnitt gerade auszurichten und eine Außenfläche des Schaftabschnitts nach dem Verjüngen rund und glatt zu halten. Eine hohe Reibung in dem Kalibrierungsabschnitt kann durch ein Schmiermittel verringert werden. Der Kalibrierungsabschnitt kann einen Durchmesser aufweisen, der gleich dem Innendurchmesser der Matrize ist, was jedoch eine relativ hohe Reibung bewirkt. Dieser Teil der Reibung steigt mit dem Einpressen immer weiter an. Der ansteigende Teil der Reibung wirkt sich jedoch bei dem Verjüngungsvorgang nicht besonders negativ aus, da die Länge des freien nicht verjüngten Schaftabschnitts beim Verjüngen abnimmt und somit immer größere Press- bzw. Druckkräfte aufnehmen kann. Es ist ebenfalls möglich, dass der Durchmesser des Kalibrierungsabschnitts größer ist als der Innendurchmesser der Matrize, wobei sich der Schaft wieder um den elastischen Anteil zurückverformen kann. Diese Ausführung weist in dem Kalibrierungsabschnitt eine deutlich verringerte Reibung auf, wodurch die Presskräfte zum Einschieben des Schaftabschnitts des Ventilvorformlings deutlich gesenkt werden können.

Bei einer weiteren Ausführung der Matrize ist diese weiter mit einem Kalibrierdorn versehen. In dieser Ausführung umfasst die Matrize einen Kalibrierdorn, der gegenüber der Matrize beweglich ist. An einem freien Ende des Kalibrierdorns ist eine Kaliberbirne angeordnet. Die Kalibrierbirne kann einstückig mit dem Kalibrierdorn ausgeführt sein. Die Kalibrierbirne kann auch als Ring ausgeführt sein, der um den Kalibrierdorn gelegt ist. Der Kalibrierdorn und insbesondere die Kalibrierbirne befindet sich beim Verjüngen in oder (in Verjüngungsrichtung) vor einem Bereich des Reduzierkegel-Abschnitts. Bei einer zweistufige Matrize befindet sich die Kalibrierbirne beim Verjüngen in oder (in Verjüngungsrichtung) vor einem Bereich des zweiten Reduzierkegel-Abschnitts.

Es ist hervorzuheben, dass die Kalibrierbirne nicht beim Verjüngen selbst zum Einsatz kommt, sondern erst von dem Kopfabschnitt durch den Schaft bis zum Schaftende gezogen wird, nachdem der Ventilschaft bereits vollständig in die Matrize / den Kalibrierungsabschnitt eingepresst wurde. Beim Kalibrieren verlängert sich der Schaftabschnitt, da beim Kalibrieren ein Teil des Materials des Schafts in Richtung des Schaftendes verdrängt wird. Durch das Verfahren wird der Innendurchmesser des bereits verjüngten Schaftabschnitts vergrößert und die Wanddicke des Schaftabschnitts verringert und vergleichmäßigt. Durch das Kalibrieren steigt zudem die Länge des Schaftabschnitts weiter an.

Im Falle einer zweistufigen Matrize bzw. einer Matrize wird nur der Teil des Schaftes kalibriert, der die zweite Verjüngungsstufe passiert hat. Damit wird die Kalibrierbirne zumindest von dem zweiten Reduzierkegel-Abschnitt durch die Matrize bis zu einem Ende eines Kalibrierungsabschnitts gezogen. Die Kalibrierbirne wird am Ende aus dem Schaftende herausgezogen. Die Kalibrierbirne kann in dem Radialprofil dem Ziehstein bzw. der Matrize entsprechen, wobei ein Kalibrierkegel das Schaftmaterial nach außen verdrängt. Hinter dem Kalibrierkegel kann ein Gegenkegel angeordnet sein, der durch einen elastischen Teil der Verformung erforderlich ist. Weiterhin kann der Gegenkegel den Bereich des Kalibrierkegels entgegen der Zugrichtung der Kalibrierbirne abstützen. Der Gegenkegel bietet zudem den Vorteil, dass der sich elastisch zurückverformende Schaftabschnitt in dem Kalibrierungsabschnitt zentriert wird.

Erfindungsgemäß umfasst die Verjüngungsmaschine eine Pressvorrichtung, die einen Ventilvorformling mit einem Schaftabschnitt in die Matrize einpressen kann. Diese Ausführung stellt der Matrize ein Stellglied wie eine Hydraulikpresse zur Seite, mit der die Matrize und der Ventilvorformling gegeneinander verschoben werden können, um einen Schaftabschnitt des Ventilvorformlings in die Matrize einzupressen.

Bei einer weiteren Ausführungsform der Verjüngungsmaschine umfasst diese, weiter eine Pressvorrichtungssteuerung, die angepasst ist, die Pressvorrichtung so zu steuern, dass der Ventilvorformling mit einer oszillierenden Kraft mit dem Schaftabschnitt in die Matrize eingepresst wird. Durch eine oszillierende Kraft kann erreicht werden, dass eine verminderte Reibung beim Verjüngen erzielt wird. Weiterhin kann durch eine oszillierende Kraft ein Schmiermittel besser zwischen dem Ventilvorformling und die Matrize eingebracht werden.

Bei einer weiteren Ausführungsform der Verjüngungsmaschine umfasst diese, weiters eine Pressvorrichtungssteuerung, die angepasst ist die Pressvorrichtung so zu steuern, dass der Ventilvorformling mit einem oszillierenden Weg mit dem Schaftabschnitt in die Matrize eingepresst wird. Durch den oszillierenden Weg kann erreicht werden, dass eine verminderte Reibung beim Verjüngen erzielt wird. Weiterhin kann durch eine oszillierende Kraft ein Schmiermittel besser zwischen dem Ventilvorformling und die Matrize eingebracht werden, da der Teil des Vorformlings bzw. der Matrize, der sich elastisch verformt, einen Transport eines Schmiermittels in den Spalt zwischen Vorformling und Matrize begünstigen kann. Durch eine oszillierende Bewegung wird der Ventil-Vorformling häufigen elastischen Verformungen unterworfen, die auch eine Verringerung des Schaftdurchmessers bewirken. Der Schaft dehnt sich nach dem Durchgang durch die engste Stelle der Matrize wieder zum Teil elastisch aus, und wird bei einem Rückwärtsdurchgang durch die Matrize ebenfalls wieder elastisch verjüngt. Durch die notwendige Zugkraft wird zumindest ein Teil des noch nicht verjüngten Schaftabschnitts von dem Reduzierkegel abgehoben, und ein Schmiermittel kann in den entstehenden Spalt eingebracht werden, wodurch die Gesamtreibung verringert werden kann. Dieser Betriebsmodus der Verjüngungsmaschine kann als Forward-and-Counter-Cyling-Movement bezeichnet werden, wobei nach einer Vorwärtsbewegung eine entsprechend kleinere Rückwärtsbewegung folgt, und diese zwei Schritte zyklisch wiederholt werden. Durch den oszillierenden Weg kann die maximale Kraft, die notwendig ist, um den Schaftabschnitt in die Matrize einzupressen verringert werden, da beispielsweise ein Druck mit dem Schaftabschnitt in die Matrize einzupressen.

Weiterhin kann die Verjüngungsmaschine gemäß einer zusätzlichen Ausführungsform weiter eine Kalibrierdorn-Zugvorrichtung umfassen. Die Kalibrierdorn-Zugvorrichtung ist eingerichtet, den Kalibrierdorn nach einem Einpressen eines Ventilvorformlings mit einem hohlen Schaft in die Matrize, von einem Kopfabschnitt des Ventilvorformlings durch einen Schaftabschnitt des Ventilvorformlings bis aus einem Schaftende herauszuziehen. Die Verjüngungsmaschine mit der Kalibrierdorn-Zugvorrichtung wird zusammen mit der Matrize mit dem Kalibrierdorn verwendet. Es ist ebenfalls vorgesehen, die vorstehend beschriebene Steuerung für eine oszillierende Kraft und/oder Wegsteuerung auch bei der Kalibrierdorn-Zugvorrichtung einzusetzen, wobei die Pressvorrichtungssteuerung ebenfalls eine Steuerung der Zugvorrichtung übernimmt oder eine gesonderte Zugvorrichtungssteuerung die Kalibriedorn-Zugvorrichtung so steuert, einen oszillierenden Weg / eine oszillierende Kraft beim Ziehen des Kalibrierdorns auszuüben.

Gemäß einem anderen Aspekt der vorliegenden Erfindung wird ein Verfahren zum Umformen eines hohlen Ventilvorformlings mit den Merkmalen des Anspruchs 6 bereitgestellt. Das Verfahren umfasst unter anderem ein Einpressen des hohlen Schaftabschnitts in die Matrize, wobei der Ausgangs-Außendurchmesser auf den Reduzierkegelinnendurchmesser verjüngt wird. Die Verjüngung kann auch etwas geringer ausfallen, da ein Teil des verjüngten Ventilschaftabschnitts elastisch zurückfedert, und so einen gering größeren Außendurchmesser aufweisen wird als eine lichte Weite der Matrize. Zudem muss berücksichtigt werden, dass der Innendurchmesser der Matrize beim Verjüngen elastisch vergrößert wird. Diese Aspekte werden hier nicht berücksichtigt, da die jeweiligen Abmessungen als diejenigen verstanden werden, die das entsprechende Resultat liefern und nicht als die, die tatsächlich an den unbelasteten Bauteilen und Elementen vorliegen.

Der Ventilvorformling wird mit einem Schaftabschnitt in eine runde Öffnung mit einem Reduzierkegel-Abschnitt der Matrize eingepresst, wobei der Reduzierkegelabschnitt den Schaftabschnitt von einem Ausgangs-Außendurchmesser zu einem Matrizeninnendurchmesser verjüngt. Ein Außendurchmesser der Öffnung der Matrize ist größer /gleich dem Ausgangs-Außendurchmesser des Ventilvorformlings, und der Matrizeninnendurchmesser ist kleiner als der Ausgangs-Außendurchmesser des Schaftabschnitts.

Gemäß einer anderen Ausführungsform des Verfahrens wird eine zweistufige Matrize mit zwei Reduzierkegeln verwendet. Der Reduzierkegel-Abschnitt bildet dabei einen ersten Reduzierkegel-Abschnitt, der einen Schaftabschnitt des Ventilvorformlings auf einen ersten Reduzierkegelabschnitt-Innendurchmesser verjüngt. Ein weiterer zweiter ReduzierkegelAbschnitt ist in der Matrize vorgesehen, um den bereits auf den ersten Reduzierkegelabschnitt-Innendurchmesser verjüngten Schaftabschnitt des Ventilvorformlings weiter auf einen (noch kleineren) Innendurchmesser des zweiten Reduzierkegelabschnitt-Innendurchmesser zu verjüngen. Dabei ist zwischen dem ersten und dem zweiten Reduzierkegelabschnitt ein Übergangsabschnitt angeordnet, in dem der, auf den ersten Reduzerkegelabschnitt-Innendurchmesser verjüngte Schaftabschnitt nicht weiter bearbeitet wird. Dieses Verfahren umfasst dabei ein doppeltes bzw. hintereinandergeschaltetes Verjüngen bei einem einzigen Durchgang durch die Matrize. Dabei sind die einzelnen Stufen kleiner als bei einer eistufigen Matrize, die Summe der beiden Stufen jedoch größer als die einer einstufigen Matrize. Das Verfahren nutzt dabei die Struktur und die Einknickneigung des Schaftabschnitts aus, wobei einerseits die Kraft für ein Einknicken von einer Länge eines Stabes abhängt. Durch die Verjüngung der erste Stufe wird der Schaftabschnitt soweit verkürzt, dass er mit einer höheren Kraft in den zweiten Reduzierkegel eingepresst werden kann, wobei zusätzlich eine geringerer Verformung in dem zweiten Reduzierkegel stattfindet.

Bei einer weiteren Ausführungsform des Verfahrens erweitert sich der Übergangsabschnitt zwischen dem ersten und dem zweiten Reduzierkegel-Abschnitt, wobei sich in dem Bereich ebenfalls ein Durchmesser des in der ersten Stufe bzw. dem ersten Reduzierkegel verjüngten Schaftabschnitts vergrößert. Der auf den ersten Reduzierkegelabschnitt-Innendurchmesser verjüngte Schaftabschnitt vergrößert sich im Rahmen einer teilweisen elastischen Rückverformung wieder auf einen größeren Außendurchmesser als den ersten inneren Durchmesser des ersten Reduzierkegels. Der in einer ersten Stufe verjüngte Schaftabschnitt kann sich wieder leicht ausdehnen, bevor er in dem zweiten Reduzierkegel-Abschnitt auf seinen endgültigen Durchmesser verjüngt wird. Der erste Reduzierkegel-Abschnitt verjüngt das eingepresste Material stärker als auf einen Eingangsdurchmesser des zweiten Reduzierkegel-Abschnitts.

Eine weitere Ausführungsform des Verfahrens zum Umformen eines hohlen Ventilvorformlings nutzt eine Matrize, die hinter dem Reduzierkegel-Abschnitt bzw. dem zweiten Reduzierkegel-Abschnitt einen Kalibrierungsabschnitt umfasst, der zylinderförmig ist. Ein End-Außendurchmesser des verjüngten oder zweifach verjüngten Schaftabschnitts wird hier durch einen zylinderförmigen Teil der Matrize kalibriert. Hier erzeugt die Kalibrierung lediglich einen geraden verjüngten Schaftabschnitt. Das reine Außenkalibrieren kann zudem eine glatte und rund Oberfläche des verjüngten bzw. zweifach verjüngten Schaftabschnitts erzielen. Der Kalibrierungsabschnitt ist umso effektiver, je näher sein Innendurchmesser an dem Innendurchmesser der Matrize liegt. Eine erhöhte Reibung kann dabei durch eine zusätzliche Schmierung direkt hinter der Matirze und vor dem Kalibrierungsabschnitt verringert werden. Die Umformmaschine kann hier mit einer gesonderten Schmierstoffeinspritzung bzw. einer Fettpresse versehen sein.

Bei einer zusätzlichen Ausführungsform umfasst ein Verfahren zum Umformen eines hohlen Ventilvorformlings, bei der die Matrize weiter einen Kalibriedorn umfasst, der an einem freien Ende mit einer Kalibrierbirne versehen ist, dabei umfasst das Verfahren weiter ein Durchziehen der Kalibrierbirne durch den verjüngten Schaft. Dabei wird vor und bei einem Einpressen des Ventilvorformlings mit dem mindestens einen Verjüngungsschritt der Kalibrierdorn vor oder an einem Bereich des Reduzierkegel-Abschnitts bzw. des zweiten Reduzierkegel-Abschnitts eingeführt und gehalten. Nach einem Einpressen bzw. dem Verjüngen wird der Kalibrierdorn mit der Kalibrierbirne durch den Reduzierkegel-Abschnitt bzw. den zweiten Reduzierkegel-Abschnitt und durch den Kalibrierungsabschnitt bis zu und aus dem Schaftende herausgezogen. Beim Kalibrieren mit der Kalibrierbirne wird eine Wandstärke des verjüngten oder doppelt verjüngten Schaftabschnitts des Ventilvorformlings vergleichmäßigt. Das beim Kalibrieren verdrängte Material des Schaftabschnitts wird in Richtung des Schaftendes verdrängt und der Schaftabschnitt wird zusätzlich verlängert. Die Kalibrierungsbirne wird durch die Matrize bis zu einem Ende eines Kalibrierungsabschnitts gezogen. Die Kalibrierbirne weist dabei einen Durchmesser auf, der über einem Innendurchmesser des verjüngten bzw. zweifach verjüngen Schaftabschnitts liegt. Der größte Verformungsgrad wird dabei beim Durchgang der Kalibrierbirne durch die Matrize erreicht. Durch den Durchgand der Kalibrierbirne durch den Kalibrierungsabschnitt wird der Schaftabschnitt weiter langgezogen und begradigt.

Erfindungsgemäß umfasst das Verjüngungsverfahren den Einsatz einer Pressvorrichtungssteuerung, wobei die Pressvorrichtungssteuerung eine Pressvorrichtung so steuert, dass der Ventilvorformling mit einer oszillierender Kraft und/oder einem oszillierenden Weg mit dem Schaftabschnitt in die Matrize eingepresst wird. Hier wird ausgenutzt, dass der Kraft/Wegverlauf ein Einpressen gegenüber einem Einknicken des unverjüngten Schaftabschnitts begünstigt. Es ist ebenfalls vorgesehen, dass der Ventilvorformling in mehreren Schritten in die Matrize ein gepresst bzw. eingerammt wird. Das Verfahren beugt dabei einem Stick-Slip-Effekt vor, in dem der Ventilvorformling wieder aus der Matrize herausgezogen wird, bevor es zu einer erhöhten Haftreibung zwischen Teilen des Vorformlings und der Matrize kommen kann.

Zur Schwingungsüberlagerung in Hauptumformungrichtung wird folgendes ausgeführt. Die Schwingungsüberlagerung im Hauptkraftfluss während der Umformung kann durch eine mechanische Schwingungsanregung (z.B. pneumatische Vibratoren bzw. Klopfer, z.B. hydraulische Systeme) oder elektro-magnetische Systeme (z.B Piezoaktoren, magnetostriktive Erreger) erfolgen. Eine Schwingungsüberlagerung kann ebenso mit einer Ultraschallschwingung erzeugt werden. Die Frequenzen und Amplituden sind dabei stark abhängig von dem gewählten Antrieb. Die Frequenz kann daher zwischen 2 HZ - 50 kHZ und die Amplitude von 1µm-2mm betragen.

In folgenden wird die vorliegende Erfindung anhand von schematischen Darstellungen von beispielhaften Ausführungsformen beschrieben.

Die Figur 1 zeigt eine einstufige Matrize zur Verjüngung eines Schaftabschnitts eines Ventilvorformlings.

Die Figuren 2A bis 2G stellen einzelne Schritte eines Verfahrens zum Umformen eines Ventilvorformlings zu einem Ventilrohling dar.

Die Figur 2H stellt einen missglückten Verjüngungsversuch dar.

Die Figuren 3A bis 3G stellen mögliche Unterschritte des Verfahrens der Figuren 2C bis 2E dar.

Die Figur 4 zeigt eine einstufige Matrize mit einem zusätzlichen Kalibrierungsabschnitt.

Die Figuren 5A bis 5D stellen einen Umformvorgang mit der Matrize der Figur 4 dar.

Die Figur 6 zeigt eine erfindungsgemäße Form der einstufigen Matrize von Figur 4, die weiter mit einem Kalibrierdorn versehen ist.

Die Figuren 7A bis 7F stellen einen Umformvorgang mit der Matrize der Figur 4 dar, bei der der Hohlraum in einem gesonderten Schritt kalibriert wird.

Die Figuren 8A bis 8C zeigen zwei zweistufige Matrizen und eine einstufige Matrize.

Die Figuren 9A bis 9E stellen einen Umformvorgang mit der Matrize der Figur 8A dar, bei der der Hohlraum in einem gesonderten Schritt kalibriert wird.

Die Figuren 10A und 10B zeigen zwei zweistufige Matrizen, die weiter mit einem Kalibrierabschnitt versehen sind.

Die Figuren 11A bis 11E stellen eine andere Ausführungsform eines erfindungsgemäßen Umformvorgangs mit der Matrize der Figur 10A dar, bei der der Hohlraum in einem gesonderten Schritt kalibriert wird.

Im Folgenden werden sowohl in der Beschreibung als auch in den Figuren gleiche oder ähnliche Bezugszeichen für gleiche oder ähnlichen Elemente und Komponenten verwendet.

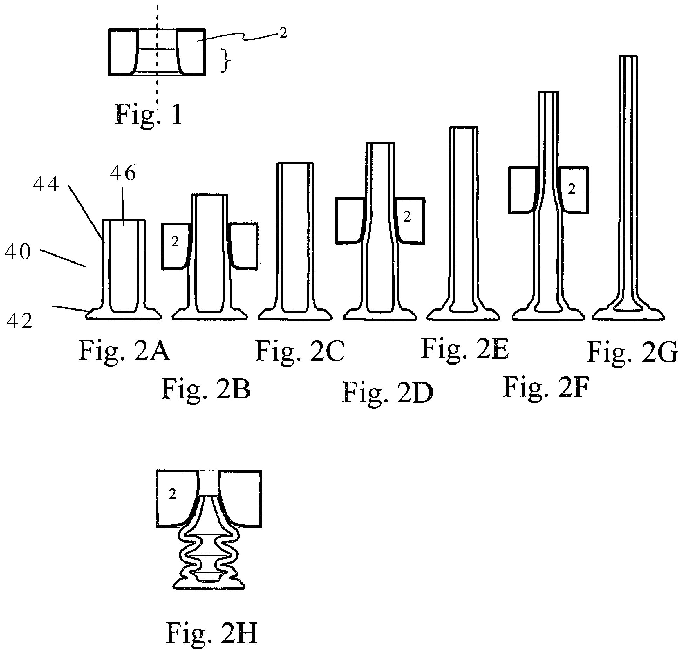

Die Figur 1 zeigt eine einstufige Matrize 2 zur Verjüngung eines Schaftabschnitts eines Ventilvorformlings. Die Matrize 2 umfasst dabei eine im Querschnitt runde Durchgangsöffnung 4. Die Durchgangsöffnung 4 umfasst dabei einen ReduzierkegelAbschnitt 6, in dem sich die Durchgangsöffnung 4 von einem Eingangsdurchmesser E der Matrize 2 zu einem Reduzierkegelinnendurchmesser R der Matrize 2 verjüngt. Der Reduzierkegelinnendurchmesser R bestimmt hier auch den Matrizeninnendurchmesser.

Hinter dem Reduzierkegelinnendurchmesser kann ein Gegenkegel oder ein gerader Abschnitt angeordnet sein. Vor dem Reduzierkegel kann eine Einführungsstruktur wie ein Einlaufkegel oder ein verrundeter Abschnitt vorliegen, um es einem Schaftabschnitt eines Ventilvorformlings zu erleichtern, in die Matrize einzutreten.

Die Matrize bildet in der vorliegenden Ausführung im Wesentlichen einen Ziehstein wie er aus dem Umformverfahren des Drahtziehens bekannt ist. Im Gegensatz zum Drahtziehen ist die Matrize jedoch dazu bestimmt, dass ein Schaftabschnitt eines Ventilvorformlings von außen bzw. von unten in die Matrize eingepresst wird. Dadurch liegt eine vollständig andere Belastungslage vor. Weiterhin kann bei der Matrize auf einen Gegenkegel verzichtet werden, wie er bei einem Ziehstein jedoch unerlässlich ist. Daher umfasst die Matrize in einer Ausführung auch keinen Gegenkegel, sondern der Verjüngungs- oder Reduzierkegel geht wie dargestellt direkt in einen zylindrischen Abschnitt über.

Die Figuren 2A bis 2G stellen einzelne Schritte eines Verfahrens zum Umformen eines Ventilvorformlings 40 zu einem Ventilrohling dar. Der Ventilvorformling 40 umfasst dabei einen Tellerabschnitt 42, der auch Kopfabschnitt genannt wird, und einen Schaftabschnitt 44, dessen Material später einen Ventilschaft bildet. In dem Schaftabschnitt ist ein Hohlraum 46 angeordnet der von einem Ende des Schaftabschnitt 44 in Richtung des Tellerabschnitts 42 verläuft. Ein Aspekt der Erfindung besteht darin, dass der Hohlraum im Bereich des Tellerabschnitts 42 einen Radius aufweist, der größer ist als der eines Schaftes des späteren Ventils. Damit lässt sich relativ einfach ein Hohlraum in einem Ventil herstellen, der im Kopf des Ventils einen größeren Durchmesser aufweist, als es sich durch eine spanende Fertigung erzielen ließe. Der Schaftabschnitt 44 des Ventilvorformling 40 weist dabei einen Ausgangs-Außendurchmesser A auf der kleiner ist als ein Eingangsdurchmesser E der Matrize 2.

In der Figur 2B ist der Schaftabschnitt 44 des Ventilvorformlings 40 annähernd zur Hälfte in die Matrize 2 der Figur 1 eingepresst worden, Dabei wurde der Ausgangs-Außendurchmesser A auf einen verjüngten Außendurchmesser Aᵥ verringert. Die Verjüngung hat jeweils den Außendurchmesser und den Innendurchmesser des Schaftabschnitts verringert, wohingegen die Länge des Schaftabschnitts durch das Umformen erhöht wurde.

In der Figur 2C wurde die Matrize 2 wieder entfernt nachdem sie bis zum Tellerabschnitt 42 bewegt wurde (bzw. der Ventilvorformling 40 bis zum Tellerabschnitt 42 in die Matrize 2 eingepresst wurde). Der einmal verjüngte Schaftabschnitt 44 des Ventilvorformlings 40 kann nun mit einer weiteren Matrize, die einen kleineren Innendurchmesser aufweist weiter verjüngt werden. Es ist möglich, den Ventilvorformling 40 einem Spannungsfreiglühen zu unterwerfen, um einen nächsten Verjüngungsschritt zu vereinfachen.

Die Figur 2D entspricht der Figur 2B, wobei lediglich eine kleinere Matrize, und der bereits einmal verformte Ventilvorformling der Figur 2C zum Einsatz kommt.

Die Figur 2E entspricht der Figur 2C, wobei der Ventilvorformling jedoch in zwei Schritten umgeformt wurde.

Die Figur 2F entspricht den Figuren 2B bzw. 2D, wobei lediglich eine noch kleinere Matrize, verwendet wird und der bereits zweimal verjüngte Schaftabschnitt des Ventilvorformlings der Figur 2E weiter verjüngt wird.

Die Figur 2G zeigt einen so oft umgeformten Ventilvorformling, dass dieser als Ventilrohling betrachtet werden kann. Der Die Figur 2E entspricht der Figur 2D, wobei der Ventilvorformling jedoch in zwei Schritten umgeformt wurde. Der Hohlraum des Ventilrohlings kann nun teilweise mit einem Kühlmittel wie Natrium gefüllt und verschlossen werden. Es ist ebenfalls möglich eine Außenfläche des Ventilrohlings spanend zu bearbeiten, um gewünschte Oberflächenqualitäten und Toleranzen zu erreichen.

Die Figur 2H zeigt schematisch, das Hauptproblem bei einem Verjüngungsschritt, nämlich die Gefahr eines Einknickens oder Ein- bzw. Ausbeulens des Schaftabschnitts beim verjüngen. Da das Verjüngen das Material auf Druck belastet, ist die Druckkraft bei der ein Versagen des Schaftabschnitts auftritt, begrenzt. Daher muss der Schaftabschnitt des Ventilvorformlings auch in mehreren Schritten verjüngt werden. Es können je nach gewähltem Material auch deutlich mehr als drei Durchgänge nötig sein, um einen Ventilvorformling zu einem Ventilrohling umzuformen.

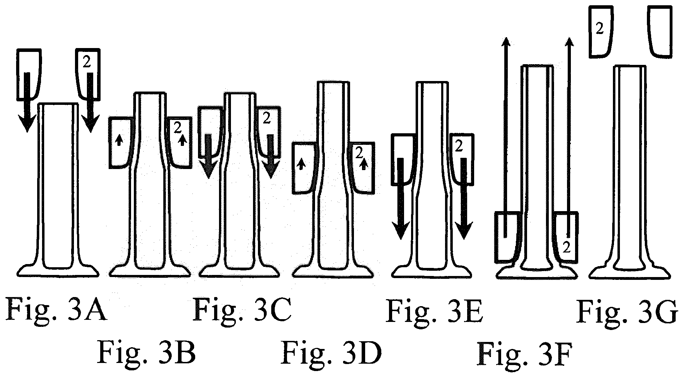

Die Figuren 3A bis 3G stellen mögliche Unterschritte des Verfahrens der Figuren 2C bis 2E dar. Anstelle einer einzigen Umformung wird hier ein stoßweises oder abschnittweises Umformen ausgeführt. Der Schaftabschnitt wird in der Figur 3A in einem Arbeitshub H_{A} mit großer Kraft etwa ein Viertel der Länge des Schaftabschnitts in die Matrize eingepresst, wie es durch die langen und fett dargestellten Pfeile angedeutet ist. Durch den geringen Weg wird verhindert dass der Schaftabschnitt einknicken kann.

In der Figur 3B wurde der Schaftabschnitt in einem Rückwärtshub H_{R} wieder ein kleines Stück aus der Matrize herausgezogen. Hier kann nun ein Schmiermittel zwischen die Matrize bzw. den Reduzierkegel und dem Schaftabschnitt eingebracht werden, wodurch die Kraft die zum Verjüngen erforderlich ist weiter reduziert werden kann.

In der Figur 3C wird der Schaftabschnitt weiter wie bei der Figur 3A mit großer Kraft etwa ein weiteres Viertel der Länge des Schaftabschnitts in die Matrize eingepresst, wie es durch die langen und fett dargestellten Pfeile angedeutet ist. Durch den geringen Weg wird verhindert, dass der Schaftabschnitt einknicken kann.

In der Figur 3D wurde der Schaftabschnitt wieder ein kleines Stück aus der Matrize herausgezogen. Hier kann nun nochmals ein Schmiermittel zwischen die Matrize bzw. den Reduzierkegel und dem Schaftabschnitt eingebracht werden.

In der Figur 3E wird der Schaftabschnitt nun mit großer Kraft bis zum Tellerabschnitt in die Matrize eingepresst. Da der nicht verjüngte Schaftabschnitt kürzer ist und ein günstigeres Lagen zu Durchmesserverhältnis aufweist, kann der letzte Teil mit einem Arbeitshub H_{A} umgeformt werden, ohne dass eine Gefahr besteht, dass der unverformte Schaftabschnitt einknickt. Es ist also möglich hier abwechselnd Arbeitshübe H_{A} und Rückwärtshübe HR aneinanderzureihen, Es ist ebenfalls vorgesehen die größer bzw. die Länge der Arbeitshübe H_{A} jeweils zu steigern. Es ist bevorzugt mit kleinen Arbeitshüben H_{A} anzufangen und deren länge linear zu erhöhen. Es ist weiter bevorzugt mit kleinen Arbeitshüben H_{A} anzufangen und deren länge progressiv zu erhöhen.

In der Figur 3G wurde der Schaftabschnitt in einem langen Rückwärtshub H_{R} wieder vollständig aus der Matrize herausgezogen. Die anderen Umformschritte können in der in den Figuren 2A bis 2G Ausführungen ebenfalls mit einem oszillierenden Weg bzw. wechselnden Arbeits- und Rückwärtshüben ausgeführt werden. Das Einpressen mit einem oszillierenden Weg kann auch bei den folgenden Ausführungen eingesetzt werden.

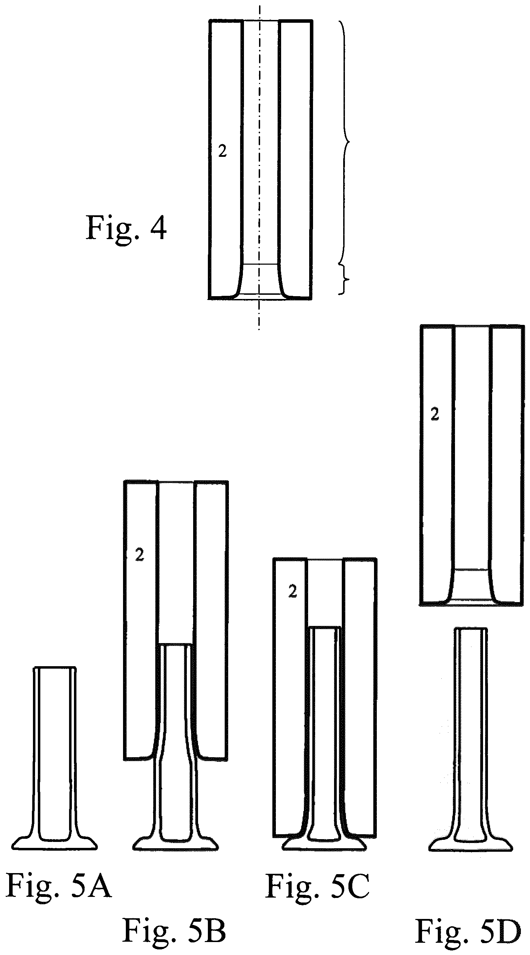

Figur 4 stellt eine Matrize dar, die im Wesentlichen der entspricht, die in der Figur 1 dargestellt ist. Weiterhin ist die Matrize mit einem Kalibrierungabschnitt 18 versehen, in dem der verjüngte Schaftabschnitt geführt und gerichtet wird. Der verjüngte Schaftabschnitt kann in der Matrize nicht seitlich ausweichen, wodurch ein geraderer Schaft erreicht werden kann. Ein geraderer Schaft lässt sich dabei leichter in einer weiteren Matrize umformen, da er eine geringere Neigung aufweist seitlich auszubrechen. Die höhere Präzision wird hier durch eine höhere Einpresskraft erkauft, was einen geringeren Verjüngungsgrad entspricht. Durch das Verfahren der Figuren 3A bis G kann hier aber durch den Einsatz von Schmiermittel der Reibungsanteil in dem Kalibrierungabschnitt 18 gering gehalten werden.

Die Figuren 5A bis 5D entsprechen der Figuren 2C bis 2E. Es kann hier ebenfalls das oszillierende Einpressverfahren der Figuren 3A bis 3G genutzt werden, um einen höheren Verjüngungsgrad zu erreichen.

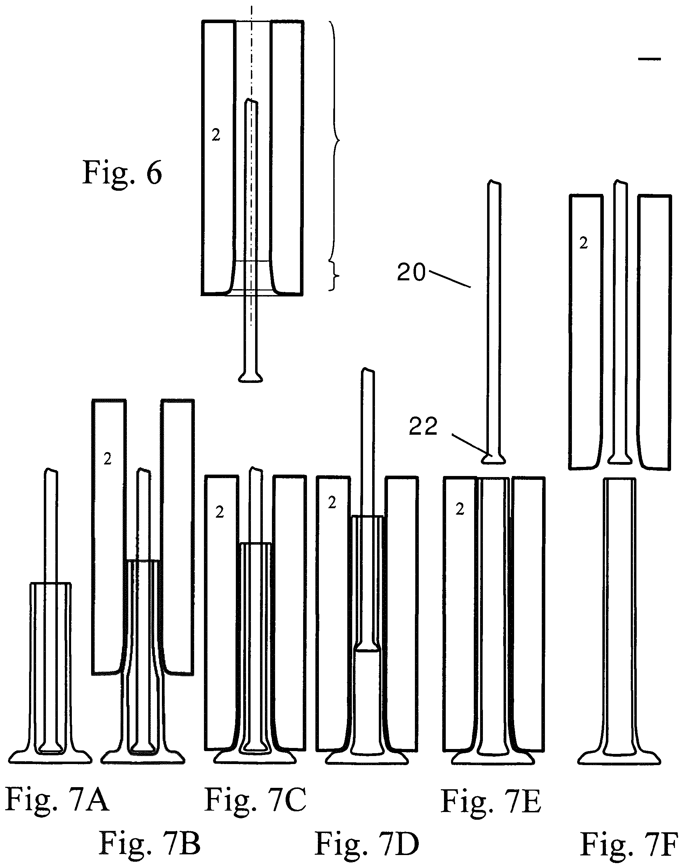

Die Figur 6 zeigt eine erfindungsgemäße Form der einstufigen Matrize von Figur 4, die weiter mit einem Kalibrierdorn 20 versehen ist. Der Kalibrierdorn umfasst dabei an einem freien Ende eine Kalibrierbirne 22, die einerseits einen Kalibrierkegel 24 und einen Gegenkegel 26 umfasst.

Der Kalibrierdorn wird dabei erfindungsgemäß im Wesentlichen unabhängig von der Matrize selbst bewegt. Der Kalibrierdorn 20 wird bei einem Einpressen nicht gegenüber einem Tellerabschnitt 42 des Ventilvorformlings 40 bewegt, und dient nicht dazu einen definierten Spalt beim Einpressen zwischen der Kalibrierbirne 22 und dem Reduzierabschnitt aufrecht zu halten.

In Figur 7A wird der Kalibrierdorn 20 mit der Kalibrierbirne 22 bis nach unten in den Hohlraum des Ventilvorformlings 40 abgesenkt. Ein Außendurchmesser der Kalibrierbirne 22 ist dabei kleiner als ein Innendurchmesser des Hohlraums 46. Die Kalibrierbirne entspricht dabei genau einem umgekrempelten Ziehstein, wie er aus dem Drahtziehen bekannt ist.

In den Figuren 7B und 7C wird der Schaftabschnitt 44 des Ventilvorformlings 40 in die Matrize 2 eingepresst, und der Kalibrierdorn zusammen mit dem Ventilvorformlings 40 bewegt. Die Kalibrierbirne 22 verbleibt beim Einpressen am Boden des Hohlraums 46.

Beim Einpressen in die Matrize wird der Innendurchmesser des Schaftabschnitts auf den verjüngten Innendurchmesser verringert. Der verjüngte Innendurchmesser ist dabei kleiner als ein Außendurchmesser der Kalibrierbirne 22.

In der Figur 7D wird der Kalibrierdorn 20 durch den Schaftabschnitt und aus dem Hohlraum 46 herausgezogen. Die Kalibrierbirne 22 schiebt dabei Material des Schaftabschnitts vor sich her und erhöht dadurch die Länge des Schaftabschnitts weiter. Gleichzeitig wird der Außendurchmesser des Schaftabschnitts und seine Wandstärke vergleichmäßigt.

In der Figur 7E wird schließlich der verjüngte und kalibrierte Schaftabschnitt des Ventilvorformlings wieder aus der Matrize 2 herausgezogen. Der verjüngte und kalibrierte Schaftabschnitt des Ventilvorformlings weist dabei den gleichen Außendurchmesser Aᵥ auf wie ein nicht kalibrierter Schaftabschnitt. Der verjüngte und kalibrierte Schaftabschnitt des Ventilvorformlings weist dabei einen größeren kalibrierten Innendurchmesser A_{VIK} auf wie der nicht kalibrierte Schaftabschnitt aus Figur 5D.

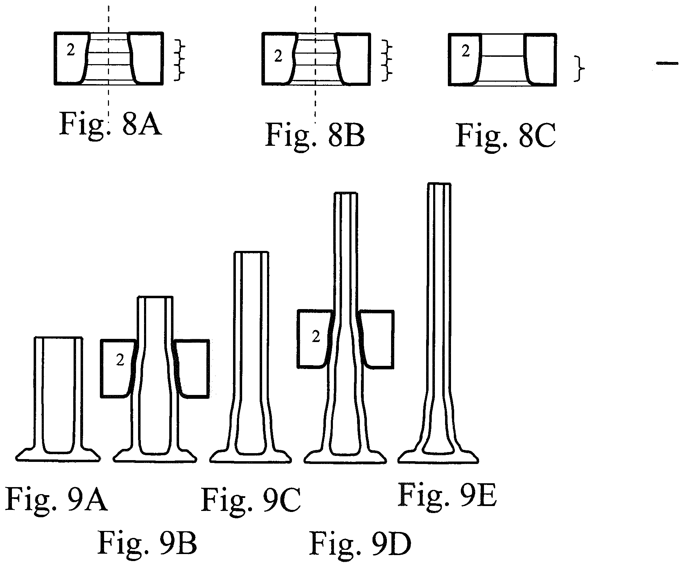

Die Figuren 8A bis 8C zeigen zwei zweistufige Matrizen und eine einstufige Matrize.

Die Matrize der Figur 8C entspricht der in der Figur 1 gezeigten einstufigen Matrize mit einem einzigen Reduzierkonus, und dient hier nur zur Veranschaulichung. Die Matrize 2 umfasst dabei einen Reduzierkegel-Abschnitt 6, der sich von einem Eingangsdurchmesser E zu einem Reduzierkegelinnendurchmesser R verjüngt. Der Reduzierkegelinnendurchmesser R bestimmt hier auch den Matrizeninnendurchmesser. Hinter dem Reduzierkegel ist ein leichter Gegenkegel angeordnet.

Die Matrize der Figur 8A stellt eine zweistufige Matrize mit einem ersten Reduzierkonus 8 und einem zweiten Reduzierkonus 16 dar. Zwischen dem ersten Reduzierkonus 8 und dem zweiten Reduzierkonus 16 ist ein zylindrischer Übergangsabschnitt 12 angeordnet. Der erste Reduzierkonus 8 weist einen ersten Eingangsdurchmesser E₁ auf. Der erste Reduzierkonus 8 verjüngt sich auf einen ersten Reduzierkegelinnendurchmesser R₁. Der zweite Reduzierkonus 16 weist einen zweiten Eingangsdurchmesser E₂ auf hier gleich dem ersten Reduzierkegelinnendurchmesser R₁ ist. Der zweite Reduzierkonus 16 verjüngt sich dabei von dem zweiten Eingangsdurchmesser E2 zu dem zweiten Reduzierkegelinnendurchmesser R₂.

Das Ziel ist dabei zu erreichen dass die Differenz zwischen E₁ und R₂ größer ist als die Differenz zwischen E und R der Matrize von Figur 8C. Dies ist möglich, da mit der Hintereinanderschaltung zweier Verjüngungsstufen einen geringeren Belastung des material erreicht werden kann.

Die Matrize der Figur 8B stellt eine zweistufige Matrize mit einem ersten Reduzierkonus 8 und einem zweiten Reduzierkonus 16 dar. Zwischen dem ersten Reduzierkonus 8 und dem zweiten Reduzierkonus 16 ist ein auseinanderlaufender Übergangsabschnitt 14 angeordnet. Der erste Reduzierkonus 8 weist einen ersten Eingangsdurchmesser E₁ auf. Der erste Reduzierkonus 8 verjüngt sich auf einen ersten Reduzierkegelinnendurchmesser R₁. Der zweite Reduzierkonus 16 weist einen zweiten Eingangsdurchmesser E₂ auf, der größer ist als der ersten Reduzierkegelinnendurchmesser R₁. Der zweite Reduzierkonus 16 verjüngt sich dabei von dem zweiten Eingangsdurchmesser E2 zu dem zweiten Reduzierkegelinnendurchmesser R₂. Hier weist die Matrize die Form zweier direkt hintereinandergeschalteter Ziehsteine auf. Diese Form ist zum Drahtziehen nicht geeignet, da die Zugbelastung nicht durch einen dünneren Draht aufgenommen werden kann.

Die Figuren 9A bis 9E stellen einen Umformvorgang mit der Matrize der Figur 8A dar, bei der der Schaftabschnitt bei jedem Einpressen in zwei Stufen verjüngt.

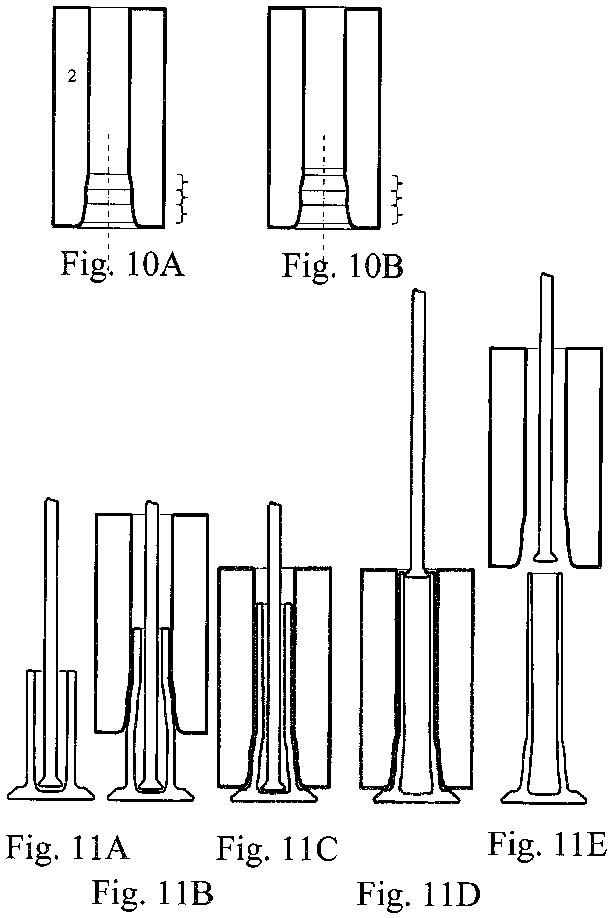

Die Figuren 10A und 10B zeigen die zweistufigen Matrizen der Figuren 8A und 8B, die weiter mit einem Kalibrierabschnitt 18 versehen sind.

Die Figuren 11A bis 11E stellen einen erfindungsgemäßen Umformvorgang mit der Matrize der Figur 10A dar, bei der der Hohlraum in einem gesonderten Schritt kalibriert wird. Das Verfahren entspricht dabei dem, das in den Figuren 7A bis 7G dargestellt ist. Das Kalibrieren betrifft dabei jedoch nur den Teil des verjüngten Schaftabschnitts, der von dem zweiten Reduzierkegel verjüngt wurde.

### Bezugszeichenliste

- 2: Matrize
- 4: Durchgangsöffnung
- 6: Reduzierkegel-Abschnitt
- 8: erster Reduzierkegel-Abschnitt
- 10: Übergangsabschnitt
- 12: Übergangsabschnitt (zylindrisch)
- 14: Übergangsabschnitt (sich erweiternd)
- 16: zweiter Reduzierkegel-Abschnitt
- 18: Kalibrierungsabschnitt (zylindrisch)
- 20: Kalibrierdorn
- 22: Kalibrierbirne
- 24: Kalibrierkegel
- 26: Gegenkegel
- 40: Ventilvorformling
- 42: Tellerabschnitt / Kopfabschnitt
- 44: Schaftabschnitt
- 46: Hohlraum

- A: Ausgangs-Außendurchmesser des Schaftabschnitts des Ventilvorformlings
- E: Eingangsdurchmesser der Matrize
- R: Reduzierkegelinnendurchmesser der Matrize auch Matrizeninnendurchmesser
- Aᵥ: verjüngter Außendurchmesser des Ventilvorformlings
- A_{vI}: verjüngter Innendurchmesser des Ventilvorformlings
- A_{vIK}: kalibrierter verjüngter Innendurchmesser des Ventilvorformlings
- E₁: erster Eingangsdurchmesser, bzw. Eingangsdurchmesser des ersten Reduzierkegelabschnitts
- R₁: erster Reduzierkegelinnendurchmesser bzw. Innendurchmesser des ersten Reduzierkegelabschnitts
- Aᵥ1: erster verjüngter Außendurchmesser des Ventilvorformlings
- A_{vI}1: erster verjüngter Innendurchmesser des Ventilvorformlings
- E₂: zweiter Eingangsdurchmesser bzw. Eingangsdurchmesser des zweiten Reduzierkegelabschnitts
- R₂: zweiter Reduzierkegelinnendurchmesser bzw. Innendurchmesser des zweiten Reduzierkegelabschnitts auch kleinster Matrizeninnendurchmesser
- Aᵥ2: zweiter verjüngter Außendurchmesser
- A_{vI}2: zweiter verjüngter Innendurchmesser des Ventilvorformlings
- A_{vIK}2: zweiter kalibrierter verjüngter Innendurchmesser des Ventilvorformlings

- H_{A}: Arbeitshub
- H_{R}: Rückwärtshub

## Patentansprüche

1. Verjüngungsmaschine zum Umformen eines Ventilvorformlings (40), umfassend eine Matrize (2) zum Umformen eines Ventilvorformlings (40), wobei die Matrize (2) eine runde Durchgangsöffnung (4) und einen Reduzierkegelabschnitt (6, 8) aufweist, wobei sich der Reduzierkegelabschnitt (6, 8) von einem Außendurchmesser (A) der Öffnung der Matrize (2) zu einem Reduzierkegelinnendurchmesser (R) verjüngt und wobei der Außendurchmesser (A) der Öffnung der Matrize (2) größer gleich dem Ausgangs-Außendurchmesser des Ventilvorformlings (40) ist, und der Matrizeninnendurchmesser kleiner ist als der Ausgangs-Außendurchmesser,
**dadurch gekennzeichnet, dass** die Verjüngungsmaschine weiter eine Pressvorrichtung und eine Pressvorrichtungssteuerung umfasst, eingerichtet, um den Ventilvorformling (40) mit einer oszillierender Kraft und/oder einem oszillierenden Weg mit dem Schaftabschnitt (44) in die Matrize (2) einzupressen,
wobei die Matrize (2) hinter dem Reduzierkegel-Abschnitt (6) bzw. dem zweiten Reduzierkegel-Abschnitt (16) einen Kalibrierungsabschnitt (18) umfasst, der zylinderförmig ist,
wobei die Verjüngungsmaschine weiter einen Kalibrierdorn (20) umfasst, der an einem freien Ende eine Kalibrierbirne (22) umfasst, wobei der Kalibrierdorn (22) von einem Bereich des Reduzierkegel-Abschnitts (6) bzw. eines zweiten Reduzierkegel-Abschnitts (16) durch die Matrize (2) bis zu einem Ende eines Kalibrierungsabschnitts (18) gezogen werden kann.

2. Verjüngungsmaschine zum Umformen eines Ventilvorformlings (40) nach Anspruch 1, wobei der Reduzierkegel-Abschnitt der Matrize (2) ein erster Reduzierkegel- Abschnitt (8) ist, und wobei die Matrize (2) weiter einen zweiten Reduzierkegel-Abschnitt (16) umfasst, und wobei ein Übergangsabschnitt (12, 14) zwischen dem ersten und dem zweiten Reduzierkegel-Abschnitt (8, 16) angeordnet ist.

3. Verjüngungsmaschine zum Umformen eines Ventilvorformlings (40) nach Anspruch 2, wobei der Übergangsabschnitt (12) zwischen dem ersten und dem zweiten Reduzierkegel-Abschnitt (8, 16) zylinderförmig ist.

4. Verjüngungsmaschine zum Umformen eines Ventilvorformlings (40) nach Anspruch 2, wobei sich der Übergangsabschnitt (14) zwischen dem ersten und dem zweiten Reduzierkegel-Abschnitt (8, 16) erweitert.

5. Verjüngungsmaschine gemäß einem der vorstehenden Anspruch 1, weiter umfassend eine Kalibrierdorn-Zugvorrichtung, die eingerichtet ist, den Kalibrierdorn (20) nach einem Einpressen eines Ventilvorformlings (40) mit einem hohlen Schaft in die Matrize (2) von einem Kopfabschnitt (42) des Ventilvorformlings (40) durch einen Schaftabschnitt (44) des Ventilvorformlings (40) bis aus einem Schaftende herauszuziehen.

6. Verfahren zum Umformen eines hohlen Ventilvorformlings (40) mit einer Verjüngungsmaschine gemäß einem der vorstehenden Ansprüche:
Bereitstellen eines Ventilvorformlings (40), der einen Kopfabschnitt (42) und einen hohlen Schaftabschnitt (44) umfasst, wobei der Schaftabschnitt (44) einen Ausgangs-Außendurchmesser aufweist, wobei das Verfahren weiter umfasst:
Einpressen des hohlen Schaftabschnitts (44) in die Matrize (2), wobei der Ausgangs-Außendurchmesser auf deinen Reduzierkegelinnendurchmesser (R) verjüngt wird,
**dadurch gekennzeichnet, dass**
die Pressvorrichtungssteuerung, die Pressvorrichtung der Verjüngungsmaschine so steuert, dass der Ventilvorformling (40) mit einer oszillierender Kraft und/oder einem Oszillierenden Weg mit dem Schaftabschnitt in die Matrize (2) eingepresst wird,
wobei die Verjüngungsmaschine weiter einen Kalibrierdorn (20) umfasst, der an einem freien Ende eine Kaliberbirne (22) umfasst, wobei diese bei einem Einpressen des Ventilvorformlings (40) in den mindestens einen Verjüngungsschritt der Matrize (2), vor einem Bereich des Reduzierkegel-Abschnitts (6) bzw. eines zweiten Reduzierkegel-Abschnitts (16) eingeführt ist, und wobei der Kalibrierdorn (20) nach dem Verjüngen mit der Kalibrierbirne (22) durch den Reduzierkegel-Abschnitts (6) bzw. den zweiten Reduzierkegel-Abschnitt (16) und durch den Kalibrierungsabschnitt (18) bis aus dem Schaftende herausgezogen wird.

7. Verfahren zum Umformen eines hohlen Ventilvorformlings (40) gemäß Anspruch 6, wobei eine Verjüngungsmaschine gemäß Anspruch 2 verwendet wird, wobei der Reduzierkegel-Abschnitt (6) ein erster Reduzierkegel-Abschnitt (8) ist, der einen Schaftabschnitt (44) des Ventilvorformlings (40) auf einen ersten Reduzierkegelabschnitt-Innendurchmesser verjüngt, und ein zweiter Reduzierkegel- Abschnitt (16) der Matrize (2) den bereits auf den ersten Reduzierkegelabschnitt-Innendurchmesser verjüngten Schaftabschnitt des Ventilvorformlings (40) weiter auf einen Innendurchmesser des zweiten Reduzierkegelabschnitt-Innendurchmesser verjüngt.

8. Verfahren zum Umformen eines hohlen Ventilvorformlings (40) gemäß Anspruch 7, wobei sich der Übergangsabschnitt (14) zwischen dem ersten und dem zweiten Reduzierkegel-Abschnitt erweitert, und wobei sich der auf den ersten Reduzierkegelabschnitt-Innendurchmesser verjüngte Schaftabschnitt im Rahmen einer teilweisen elastischen Rückverformung wieder auf einen größeren Außendurchmesser als den ersten inneren Durchmesser vergrößert.

9. Verfahren zum Umformen eines hohlen Ventilvorformlings (40) gemäß Anspruch 7, mit einer Verjüngungsmaschine gemäß Anspruch 5, wobei die Matrize (2) hinter dem Reduzierkegel-Abschnitt (6) bzw. dem zweiten Reduzierkegel-Abschnitt (16) einen Kalibrierungsabschnitt (18) umfasst, der zylinderförmig ist, wobei ein End-Außendurchmesser des verjüngten bzw. zweifach verjüngten Schaftabschnitts (44) durch einen zylinderförmigen Teil der Matrize (2) kalibriert wird.

## Claims

1. A tapering machine for forming a valve preform (40), comprising a die (2) for forming a valve preform (40), wherein the die (2) has a circular through opening (4) and a reducing cone portion (6, 8), wherein the reducing cone portion (6, 8) tapers from an outer diameter (A) of the opening of the die (2) to a reducing cone inner diameter (R), and wherein the outer diameter (A) of the opening of the die (2) is greater than or equal to the initial outer diameter of the valve preform (40), and the die inner diameter is smaller than the initial outer diameter,
**characterized in that** the tapering machine further comprises a pressing device and a pressing device control arranged to press the valve preform (40) with an oscillating force and / or an oscillating path with the stem portion (44) into the die (2),
wherein the die (2) comprises a calibration portion (18), which is cylindrical and arranged behind the reducing cone portion (6) or the second reducing cone portion (16),
wherein the tapering machine further comprises a calibration mandrel (20) comprising a calibration bulb (22) at a free end, wherein the calibration mandrel (20) can be pulled through the die (2) from an area of the reducing cone portion (6) or a second reducing cone portion (16) to an end of a calibration portion (18).

2. The tapering machine for forming a valve preform (40) according to claim 1, wherein the reducing cone portion of the die (2) is a first reducing cone portion (8), and wherein the die (2) further comprises a second reducing cone portion (16), and wherein a transition portion (12, 14) is arranged between the first and second reducing cone portions (8, 16).

3. The tapering machine for forming a valve preform (40) according to claim 2, wherein the transition portion (12) between the first and second reducing cone portions (8, 16) is cylindrical.

4. The tapering machine for forming a valve preform (40) according to claim 2, wherein the transition portion (14) between the first and the second reducing cone portion (8, 16) is extended.

5. The tapering machine according to claim 1, further comprising a calibration mandrel pulling device that is adapted to pull the calibration mandrel (20) from a head portion (42) of the valve preform (40) through a stem portion (44) of the valve preform (40) out of a stem end after a pressing a valve preform (40) having a hollow stem into the die (2).

6. A method of forming a hollow valve preform (40) with a tapering machine according to one of the preceding claims:
providing a valve preform (40) comprising a head portion (42) and a hollow stem portion (44), the stem portion (44) having an initial outer diameter, the method further comprising:
pressing the hollow stem portion (44) into the die (2), wherein the initial outer diameter is tapered to a reducing cone inner diameter (R), **characterized in that**
the pressing device control controls the pressing device of the tapering machine in such a way that the valve preform (40) is pressed into the die (2) with an oscillating force and / or an oscillating path with the stem portion,
wherein the tapering machine further comprises a calibration mandrel (20) comprising a calibration bulb (22) at a free end, wherein this one, when the valve preform (40) is pressed into the at least one tapering step of the die (2), is inserted in front of an area of the reducing cone portion (6) or a second reducing cone portion (16), and wherein the calibration mandrel (20) is pulled out through the reducing cone portion (6) or the second reducing cone portion (16) and through the calibration portion (18) out of the stem end after the tapering with the calibration bulb (22).

7. A method of forming a hollow valve preform (40) according to claim 6, wherein a tapering machine according to claim 2 is used, wherein the reducing cone portion (6) is a first reducing cone portion (8) tapering a stem portion (44) of the valve preform (40) to a first reducing cone portion inner diameter, and a second reducing cone portion (16) of the die (2) further tapering the stem portion of the valve preform (40), which is already tapered to the first reducing cone portion inner diameter, to an inner diameter of the second reducing cone portion inner diameter.

8. A method of forming a hollow valve preform (40) according to claim 7, wherein the transition portion (14) between the first and the second reducing cone portion is extended, and wherein the stem portion tapered to the first reducing cone portion inner diameter increases again to a larger outer diameter than the first inner diameter as part of a partial resilient re-deformation.

9. A method for forming a hollow valve preform (40) according to claim 7 with a tapering machine according to claim 5, wherein the die (2) comprises a cylindrical calibration portion (18) behind the reducing cone portion (6) or the second reducing cone portion (16), wherein an end outer diameter of the tapered or double tapered stem portion (44) is calibrated by a cylindrical part of the die (2).

## Revendications

1. Machine à effiler pour remodeler une préforme de valve (40), comprenant une matrice (2) pour remodeler une préforme de valve (40), dans laquelle la matrice (2) présente une ouverture traversante ronde (4) et une section de cône de réduction (6, 8), dans laquelle la section de cône de réduction (6, 8) se rétrécit d'un diamètre extérieur (A) de l'ouverture de la matrice (2) à un diamètre intérieur (R) de cône de réduction et dans laquelle le diamètre extérieur (A) de l'ouverture de la matrice (2) est supérieur ou égal au diamètre extérieur de sortie de la préforme de valve (40), et le diamètre intérieur de la matrice est inférieur au diamètre extérieur de sortie,
**caractérisé en ce que** la machine à effiler comprend en outre un dispositif de pressage et une commande de dispositif de pressage, conçus pour presser la préforme de valve (40) avec une force oscillante et/ou une trajectoire oscillante avec la section d'arbre (44) dans la matrice (2),
dans laquelle la matrice (2) comprend derrière la section de cône de réduction (6), resp. la deuxième section de cône de réduction (16) une section d'étalonnage (18), qui est de forme cylindrique,
dans laquelle la machine à effiler comprend en outre un mandrin d'étalonnage (20), qui comprend à une extrémité libre une poire d'étalonnage (22), dans laquelle le mandrin d'étalonnage (22) peut être étiré par une zone de la section de cône de réduction (6), resp. une deuxième section de cône de réduction (16) à travers la matrice (2) jusqu'à une extrémité d'une section d'étalonnage (18).

2. Machine à effiler pour remodeler une préforme de valve (40) selon la revendication 1, dans laquelle la section de cône de réduction de la matrice (2) est une première section de cône de réduction (8), et dans laquelle la matrice (2) comprend en outre une deuxième section de cône de réduction (16), et dans laquelle une section de transition (12, 14) est agencée entre les première et deuxième sections de cône de réduction (8, 16).

3. Machine à effiler pour remodeler une préforme de valve (40) selon la revendication 2, dans laquelle la section de transition (12) entre la première et la deuxième section de cône de réduction (8, 16) est de forme cylindrique.

4. Machine à effiler pour remodeler une préforme de valve (40) selon la revendication 2, dans laquelle la section de transition (14) s'élargit entre la première et la deuxième section de cône de réduction (8, 16).

5. Machine à effiler selon une des revendications précédentes 1, comprenant en outre un dispositif de traction de mandrin de calibrage, qui est conçu pour extraire le mandrin de calibrage (20) après un pressage d'une préforme de valve (40) avec un arbre creux dans la matrice (2) d'une section de tête (42) de la préforme de valve (40) à travers une section d'arbre (44) de la préforme de valve (40) jusqu'à une extrémité de l'arbre.

6. Procédé pour remodeler une préforme de valve creuse (40) avec une machine à effiler selon une des revendications précédentes :
la fourniture d'une préforme de valve (40) comprenant une partie de tête (42) et une partie de tige creuse (44), dans lequel la partie de tige (44) présente un diamètre extérieur de sortie, dans lequel le procédé comprend en outre :
le pressage de la section d'arbre creux (44) dans la matrice (2), dans lequel le diamètre extérieur de sortie est effilé à un diamètre intérieur de cône de réduction (R),
**caractérisé en ce que**
la commande du dispositif de pressage commande le dispositif de pressage de la machine à effiler d'une manière telle que la préforme de valve (40) soit enfoncée dans la matrice (2) avec une force oscillante et/ou une trajectoire oscillante avec la section d'arbre,
dans lequel la machine à effiler comprend en outre un mandrin d'étalonnage (20), qui comprend à une extrémité libre une poire d'étalonnage (22), dans lequel celle-ci lors du pressage de la préforme de valve (40) dans au moins une étape d'effilage de la matrice (2), est insérée avant une zone de la section de cône de réduction (6), resp. d'une deuxième section de cône de réduction (16) et dans lequel le mandrin d'étalonnage (20) après l'effilage avec la poire d'étalonnage (22) est extrait à travers la section de cône de réduction (6), resp. la deuxième section de cône de réduction (16) et à travers la section d'étalonnage (18) jusqu'à une extrémité de l'arbre.

7. Procédé pour remodeler une préforme de valve creuse (40) selon la revendication 6, dans lequel une machine à effiler selon la revendication 2 est utilisée, dans lequel la section de cône de réduction (6) est une première section de cône de réduction (8), qui effile une section d'arbre (44) de la préforme de valve (40) à un premier diamètre intérieur de la section de cône de réduction se rétrécit, et effile davantage une deuxième section de cône de réduction (16) de la matrice (2) de la section d'arbre de la préforme de valve (40), qui est déjà effilée au diamètre intérieur de la première section de cône de réduction, à un diamètre intérieur du deuxième diamètre intérieur de la deuxième section de cône de réduction.

8. Procédé pour remodeler une préforme de valve creuse (40) selon la revendication 7, dans lequel la section de transition (14) entre la première et la deuxième section de cône de réduction s'élargit et dans lequel la section de tige s'effile jusqu'au premier diamètre intérieur de section de cône de réduction, au cours d'une récupération élastique partielle, à nouveau jusqu'à un diamètre extérieur plus grand agrandi comme le premier diamètre intérieur.

9. Procédé pour remodeler une préforme de valve creuse (40) selon la revendication 7, comportant une machine à effiler selon la revendication 5, dans lequel la matrice (2) derrière la section de cône de réduction (6) ou la deuxième section de cône de réduction (16) comprend une section d'étalonnage (18) qui est de forme cylindrique, dans lequel un diamètre extérieur d'extrémité de la section d'arbre effilée ou doublement effilée (44) est étalonnée par une partie cylindrique de la matrice (2).
